# EUROPEAN PATENT APPLICATION

(11) **EP 4 261 577 A1**
(43) Date of publication of application: **18.10.2023**
(21) Application number: 20964876.5
(22) Date of filing: 22.12.2020
(51) Int. Cl.: G02B 6/42

(54) **OPTICAL MODULE**

(30) Priority: 10.12.2020 CN 202011432480
(71) Applicant: Wuhan Telecommunication Devices Co., Ltd., Hubei 430074 (CN)
(72) Inventor: MEI, Kai, Wuhan, Hubei 430074 (CN); QUAN, Benqing, Wuhan, Hubei 430074 (CN); ZHOU, Yun, Wuhan, Hubei 430074 (CN); SUN, Liping, Wuhan, Hubei 430074 (CN)
(74) Representative: Patentgruppen A/S
(86) International application number: PCT/CN2020/138352
(87) International publication number: WO 2022/120946

(57) **Abstract**

An optical module comprising: a pull ring (1), a rotating fork (2), an unlocking body (3) and a base (4), wherein a fork opening (30) is formed in the unlocking body (3), a protrusion (40) is arranged on the base (4), the unlocking body (3) is arranged on the base (4) and connected to the rotating fork (2), the rotating fork (2) is movably connected to the base (4) and is connected with the pull ring (1); and the protrusion (40) is used for coupling with a lock hole (15) of an interface device, so as to lock the optical module on the interface device. The pull ring (1) drives the rotating fork (2) to rotate along the base (4), and the rotating fork (2) pushes the unlocking body (3) to move towards the protrusion (40) in the rotating process until the fork opening (30) abuts and opens the lock hole (15) of the interface device, then the protrusion (40) is decoupled from the lock hole (15) of the interface device, thus realizing an unlocking function. By means of the push-type unlocking structure, internal space of the optical module is ensured to the maximum extent, and in the unlocking process, the structure of the optical module itself is not damaged, thus improving the reliability of the optical module.

## Description

### TECHNICAL FIELD

The present disclosure belongs to the technical field of optical communications, and in particular, relates to an optical module.

### BACKGROUND

As an important active optical device, an optical module (Optical transceiver) implements an electro-optical conversion and optical-electrical conversion of signals at a sending end and a receiving end respectively. As the transmission of communication signals mainly uses optical fibers as the medium, while what are processed by a generating end, forwarding end, processing end and receiving end are electric signals, the optical module has a wide and ever-increasing market space. The upstream of optical modules are mainly optical chips and passive optical devices, and the downstream customers are mainly telecom main equipment vendors, operators and Internet cloud computing enterprises.

The optical module follows a chip-component (Optical Subassembly, abbreviated as OSA)-module packaging sequence. The laser chip and the detector chip form a TOSA (abbreviation of Transmitter Optical Subassembly) and a ROSA (abbreviation of Receiver Optical Subassembly) through traditional TO packaging. Meanwhile, the matched electric chip is attached to the PCB (abbreviation of Printed Circuit Board), and then the optical channel and the optical fiber are connected through precision coupling, and finally are packaged into a complete optical module. Emerging COB (abbreviation of Chip on Board), which is mainly used in short-range multimode, uses a hybrid integration method, attaching a chip to a PCB through a special bonding welding process, and using non-airtight packaging.

The optical module with the SFP (abbreviation of Small Form-factor Pluggable) + AOC (abbreviation of Active Optical Cables) is mainly used in a short distance, and along with the development of applications such as cloud computing, Internet of Things, and mobile Internet, the rapidly increased data traffic raises higher and higher requirements on bandwidth. In recent years, the strategy of "broadband China" and the strategy for accelerating the construction of National Cyber Development Strategy are successively put forward, and as one of the most important information communication infrastructures, optical communication plays an increasingly prominent role of supporting social informatization, broadband construction and cyberpower in China. The rapid development of the optical communication industry has driven the optical modules to update, and the current increasingly intense market competition of current optical communication requires the higher interface density and interface board containment while the communication equipment is smaller and smaller. In order to meet the requirements of optical communication equipment, the optical module is the development for highly integrated small package. The SFP+ optical module is still a mainstay in the optical module family in the recent 5 to 10 years. Especially in recent years, the long-distance 40 kilometers LR SFP+ is developing rapidly. It has great prospect and significance for the improvement and optimization for SFP+ optical modules.

From the aspect of the demand side, the growing demand for bandwidth drives the rapid growth in demand quantity for high-speed optical modules, bringing sustained growth in revenue to optical module manufacturers; meanwhile, due to the fact that optical module products belongs to non-standard products, there are more requirements for customization, which also makes the research and development of optical modules more difficult, and puts forward higher requirements for optical modules whether in optics, circuits, or structures.

From the aspect of the packaging structure, when the optical modules are applied to data center switches, the optical modules are likely to be frequently plugged and unplugged repeatedly during the using process, and it is difficult to be plugged and unplugged, and the optical modules per se are prone to damage and failure during more than a hundred plugging and unplugging processes. In addition, the optical modules trend to have large capacity as well as small volume, and in order to cope with the dense interfaces of data center switches, the optical module packaging structure must be more compact.

In view of the above, it is a pressing problem in the art to overcome the defects of the present product in the art.

### SUMMARY

In allusion to the above-mentioned defects or improvement requirements in the prior art, the present disclosure provides an optical module. An object of the present disclosure is to solve the problem that it is difficult for the optical module to be plugged and unplugged on intensive cabinets by a long pull ring structure; and a push-type unlocking structure ensures the space inside the optical module to the maximum extent and during the unlocking process, to not damage the structure of the optical module per se, thereby improving the reliability of the optical module and prolonging the service life of the optical module. That is, the present disclosure solves a technical problem that it is difficult for the optical module to be plugged and unplugged on intensive cabinets, and during the unlocking process, it is prone to causing destruction for the optical module, and the unlocking structure occupying a large space.

In order to realize the above-mentioned object, according to one aspect of the present disclosure, an optical module is provided. The optical module comprises a pull ring 1, a rotating fork 2, an unlocking body 3 provided with a fork opening 30, and a base 4 provided with a protrusion 40, the unlocking body 3 being provided on the base 4, the unlocking body 3 being connected with the rotating fork 2, the rotating fork 2 being movably connected with the base 4, and the pull ring 1 being connected with the rotating fork 2;
wherein the protrusion 40 is used for coupling with a lock hole 15 of an interface device, so as to lock the optical module on the interface device;
wherein the pull ring 1 is used for receiving an external force, so as to drive the rotating fork 2 to rotate along the base 4, and during the rotating process, the rotating fork 2 pushes the unlocking body 3 to move in a direction close to the protrusion 40, until the fork opening 30 abuts and opens the lock hole 15 of the interface device, and then the protrusion 40 is decoupled from the lock hole 15 of the interface device.

Preferably, the rotating fork 2 comprises a rotating arm 20 which is provided with a force bearing part, a rotating part and a force applying part, wherein the rotating part is connected with the pull ring 1, the rorating part forms a rotating connection with the base 4, and the force applying part is connected with the unlocking body 3;
the force bearing part receives an external force from the pull ring 1, driving the rotating arm 20 to rotate around the rotating part, and pushing the unlocking body 3 to move in the direction close to the protrusion 40 via the force applying part during the rotating process.

Preferably, the force applying part is specifically a rotating shaft 21, and the unlocking body 3 is provided with a groove 31, in which the rotating shaft 21 is arranged;
when the pull ring 1 receives the external force, the rotating arm 20 receives the external force and rotates around the rotating part, and during the rotating process, the rotating shaft 21 pushes the unlocking body 3 to move in the direction close to the protrusion 40 through the groove 31.

Preferably, the force applying part is specifically a coupling hole, and a fixing shaft is provided on the unlocking body 3 and is arranged within the coupling hole;
the force bearing part receives the external force from the pull ring 1, and the rotating arm 20 rotates around the rotating part, the coupling hole driving the unlocking body 3 to move in the direction close to the protrusion 40 during the rotating process.

Preferably, the force applying part is specifically a fixing shaft, and the unlocking body 3 is provided with a coupling hole, within which the fixing shaft is arranged.

Preferably, the force bearing part is specifically a fixing column 201, the rotating part being specifically a shaft hole 202, a shaft column 41 being provided on the base 4, and a fixing hole 11 being provided in the pull ring 1;
the fixing column 201 is coupled with the fixing hole 11, and the shaft column 41 is accommodated within the shaft hole 202, wherein the shaft column 41 and the shaft hole 202 are rotatable relative to each other.

Preferably, the force bearing part is specifically a fixing hole, the rotating part being specifically a shaft hole 202, a shaft column 41 being provided on the base 4, and a fixing column being provided on the pull ring 1;
the fixing column is coupled with the fixing hole, and the shaft column 41 is accommodated within the shaft hole 202, wherein the shaft column 41 and the shaft hole 202 are rotatable relative to each other.

Preferably, the force bearing part is specifically a fixing column 201, the rotating part being specifically a shaft column, a shaft hole being provided in the base 4, and a fixing hole 11 being provided in the pull ring 1;
the fixing column 201 is coupled with the fixing hole 11, and the shaft column is accommodated within the shaft hole, wherein the shaft column and the shaft hole are rotatable relative to each other.

Preferably, the force bearing part is specifically a fixing hole, the rotating part being specifically a shaft column, a shaft hole being provided in the base 4, and a fixing column being provided on the pull ring 1;
the fixing column is coupled with the fixing hole, and the shaft column is accommodated within the shaft hole, wherein the shaft column and the shaft hole are rotatable relative to each other.

Preferably, a guide groove 42 is provided on the base 4, and a bending part 12 is provided on the pull ring 1, wherein the bending part 12 is arranged in the guide groove 42 and is movable along the guide groove 42.

Preferably, the optical module further comprises an elastic member 5, and a first accommodating space 43 is provided in the base 4, wherein the elastic member 5 is accommodated within first accommodating space 43, and a blocking surface 33 is provided on the unlocking body 3;
wherein the blocking surface 33 compresses the elastic member 5 when the unlocking body 3 moves in the direction close to the protrusion 40; after the external force applied to the pull ring 1 is released, the elastic member 5 recovers, and the external force is applied to the blocking surface 33, so that the unlocking body 3 moves in a direction away from the protrusion 40.

Preferably, a side plate 44 and a fixing surface 45 are provided on the base 4, wherein the side plate 44, the fixing surface 45 and a side surface of the base 4 form the first accommodating space 43, and a mounting column 451 is provided on the fixing surface 45, wherein one end of the elastic member 5 is sleeved on the mounting column 451, and the other end of the elastic member 5 is provided adj acent to the blocking surface 33.

Preferably, a step surface 46 is provided on the base 4, and a turning surface 34 and a limiting surface 35 are provided on the unlocking body 3, wherein the limiting surface 35 is connected with the blocking surface 33;
wherein the blocking surface 33 compresses the elastic member 5 when the unlocking body 3 moves in the direction close to the protrusion 40; and the limiting surface 35 moves along the side plate 44 until the turning surface 34 abuts against the step surface 46.

Preferably, the optical module further comprises a circuit board 6 and an upper cover 7, an optical fiber device 60 being provided on the circuit board 6, a cylindrical portion 601 and a disc portion 602 being provided on the optical fiber device 60, a first cylindrical surface 47 and a semicircular groove 48 being provided on the base 4, a second cylindrical surface 71 being provided on the upper cover 7, the disc portion 602 being arranged in the semicircular groove 48, and the cylindrical portion 601 being limited in a space formed by the first cylindrical surface 47 and the second cylindrical surface 71.

Preferably, the optical module further comprises a screw 8, a first through hole 72 being provided in the upper cover 7, and a threaded hole 49 being provided in the base 4, wherein the screw 8 penetrates the first through hole 72 and forms a threaded connection with the threaded hole 49, so as to fix the upper cover 7 and the base 4 relative to each other.

Preferably, the optical module further comprises a first housing 9, a second through hole 91 being provide in a top surface of the first housing 9, a third through hole 92 being provided in the side surface of the first housing 9, and a first wedge table 50 being provided on the base 4, wherein the protrusion 40 passes through the second through hole 91, and the third through hole 92 is engaged with the first wedge table 50, so as to fix the first housing 9 on the base 4.

Preferably, the optical module further comprises a second housing 10, a fourth through hole 101 being provided in a side surface of the second housing 10, and a second wedge table 51 being provided on the base 4, wherein the fourth through hole 101 is engaged with the second wedge table 51, so as to fix the second housing 10 on the base 4.

Generally speaking, compared with the prior art, the above technical solutions conceived by the present disclosure have the following beneficial effects. The present disclosure provides an optical module comprising a pull ring, a rotating fork, an unlocking body and a base, wherein a fork opening is provided on the unlocking body; a protrusion is provided on the base; the unlocking body is provided on the base; the unlocking body is connected with the rotating fork; the rotating fork is movably connected with the base; and the pull ring is connected with the rotating fork; and wherein the protrusion is used for coupling with a lock hole of an interface device, so as to lock the optical module on the interface device.

In the present disclosure, the pull ring drives the rotating fork to rotate along the base, and during the rotating process, the rotating fork pushes the unlocking body to move in the direction close to the protrusion until the fork opening abuts and opens the lock hole of the interface device, and then the protrusion is decoupled from the lock hole of the interface device, thus realizing an unlocking function. By means of a long pull ring structure, the problem that it is difficult for the optical module to be plugged and unplugged on intensive cabinets is solved, and the push-type unlocking structure ensures the space inside the optical module to the maximum extent, and during the unlocking process, it does not damage the structure of the optical module per se, thus, improving the reliability of the optical module, and prolonging the service life of the optical module. The present disclosure solves the problem that it is difficult for the optical module to be plugged and unplugged on the intensive cabinets, and during the unlocking process, it is prone to causing destruction for the optical module, and the unlocking structure occupies a large space.

### BRIEF DESCRIPTION OF THE DRAWINGS

FIG. 1 is a schematic structural diagram of an optical module according to an embodiment of the present disclosure.
FIG. 2 is an explosion schematic diagram of an optical module according to an embodiment of the present disclosure.
FIG. 3 is a schematic structural diagram of a pull ring according to an embodiment of the present disclosure.
FIG. 4 is a schematic structural diagram of a rotating fork according to an embodiment of the present disclosure.
FIG. 5 is a schematic structural diagram of a rotating fork according to an embodiment of the present disclosure.
FIG. 6 is a schematic structural diagram of a base according to an embodiment of the present disclosure.
FIG. 7 is a schematic structural diagram of the base in FIG. 6 at another viewing angle according to an embodiment of the present disclosure.
FIG. 8 is a schematic diagram of an internal structure of the base in FIG. 6 according to an embodiment of the present disclosure.
FIG. 9 is a schematic structural diagram corresponding to the transformation of the optical module from the locking state to the unlocking state, and the reset from the unlocking state to the locking state, according to an embodiment of the present disclosure.
FIG. 10 is a schematic structural diagram corresponding to the transformation of the optical module from the locking state to the unlocking state according to an embodiment of the present disclosure.
FIG. 11 is a schematic structural diagram of the fork opening which abuts and opens the lock hole of the interface device according to an embodiment of the present disclosure.
FIG. 12 is a schematic structural diagram of a circuit board according to an embodiment of the present disclosure.
FIG. 13 is a schematic structural diagram of an upper cover according to an embodiment of the present disclosure.
FIG. 14 is a schematic structural diagram of a first housing according to an embodiment of the present disclosure.
FIG. 15 is a schematic structural diagram of a second housing according to an embodiment of the present disclosure.
FIG. 16 is a schematic structural diagram of a pull ring, an unlocking fork and an unlocking body according to an embodiment of the present disclosure.
FIG. 17 is a schematic structural diagram of another pull ring, unlocking fork and unlocking body according to an embodiment of the present disclosure.

### DETAILED DESCRIPTION

For clear description of objectives, technical solutions, and advantages of the present disclosure, the present disclosure is further described in detail below by reference to the embodiments and the accompanying drawings. It should be understood that the embodiments described here are only exemplary ones for illustrating the present disclosure, and are not intended to limit the present disclosure.

In the description of the present disclosure, it should be understood that the terms "inner", "outer", "internal", "external", "transversal", "longitudinal", "upper", "lower", "top", "bottom" and the like indicate orientations and position relationships which are based on the illustrations in the accompanying drawings, and these terms are merely for ease and brevity of the description, instead of indicating or implying that the devices or elements shall have particular orientations and shall be structured and operated based on the particular orientations. Accordingly, these terms shall not be construed as limiting the present disclosure.

In addition, technical features involved in various embodiments of the present disclosure described hereinafter may be combined as long as these technical features are not in conflict.

### Embodiment 1:

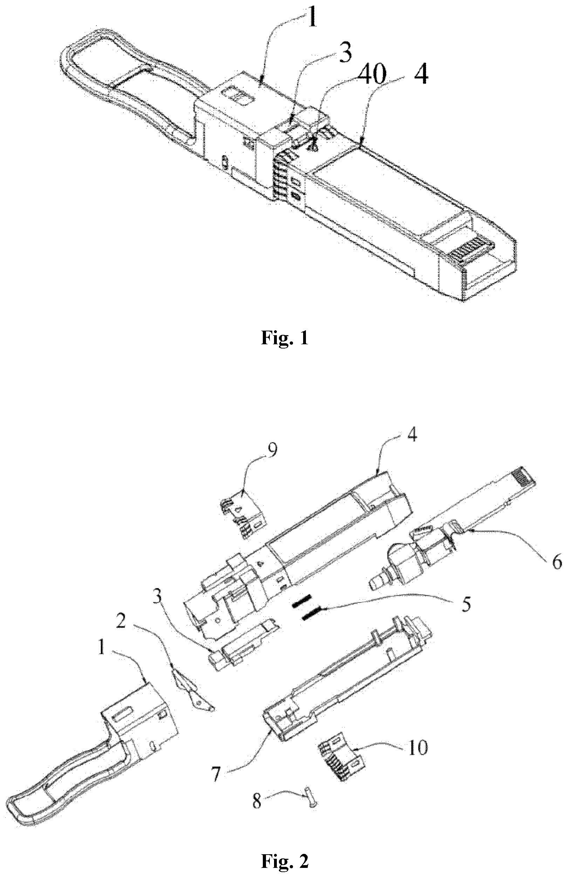

Referring to FIG. 1 to FIG. 5, the present embodiment provides an optical module, comprising a pull ring 1, a rotating fork 2, an unlocking body 3 and a base 4. The unlocking body 3 is provided with a fork opening 30. A protrusion 40 is provided on the base 4. The unlocking body 3 is provided on the base 4. The unlocking body 3 is connected with the rotating fork 2. The rotating fork 2 is movably connected with the base 4, and the pull ring 1 is connected with the rotating fork 2.

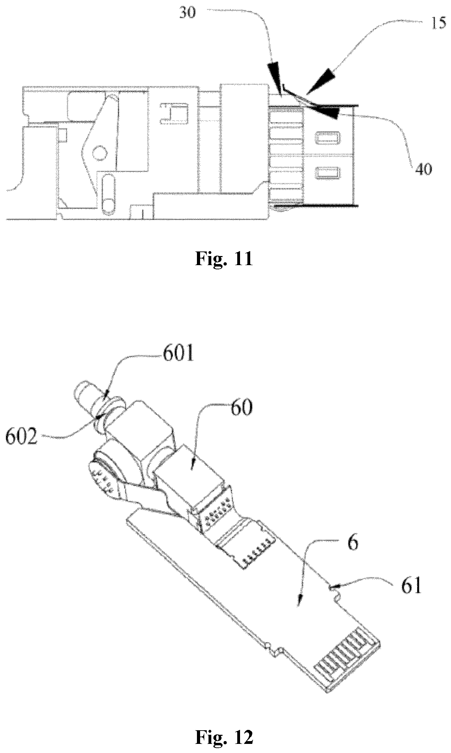

In practical applications, the protrusion 40 is used for coupling with a lock hole 15 (as shown in FIG. 11) of an interface device, so as to lock the optical module on the interface device.

The unlocking mode of the present embodiment is as follows: the pull ring 1 is used for receiving an external force, so as to drive the rotating fork 2 to rotate along the base 4, and during the rotating process, the rotating fork 2 pushes the unlocking body 3 to move towards the protrusion 40, i.e., in a direction close to the protrusion 40, until the fork opening 30 abuts and opens the lock hole 15 of the interface device, and then the protrusion 40 is decoupled from the lock hole 15 of the interface device.

In a preferred embodiment, the middle portion of the fork opening 30 is a notch, and the two lateral portions of the fork opening 30 are wedge-shaped, wherein the notch is corresponding to the position of the protrusion 40. During the unlocking process, the wedge-shaped lateral portion in such structure will firstly make contact with the lock hole 15 of the interface device, so as to abut and open the lock hole 15 of the interface device; meanwhile, the notch can just keep away from the protrusion 40, so as to avoid causing interference.

In the present embodiment, the pull ring 1 drives the rotating fork 2 to rotate along the base 4, and during the rotating process, the rotating fork 2 pushes the unlocking body 3 to move in the direction close to the protrusion 40, until the fork opening 30 abuts and opens the lock hole 15 of the interface device, and then the protrusion 40 is decoupled from the lock hole 15 of the interface device, thus realizing an unlocking function. By means of a long pull ring structure, the problem that it is difficult for the optical module to be plugged and unplugged on intensive cabinets is solved. The push-type unlocking structure ensures the space inside the optical module to the maximum extent, and during the unlocking process, the structure of the optical module per se is not damaged, thus, improving the reliability of the optical module, and prolonging the service life of the optical module. Thus, the problem is solved that it is difficult for the optical module to be plugged and unplugged on intensive cabinets, and during the unlocking process, it is prone to causing destruction for the optical module, and furthermore, the unlocking structure occupies a large space.

In an actual application scenario, the rotating fork 2 comprises a rotating arm 20 which is provided with a force bearing part connected with the pull ring 1, a rotating part forming a rotating connection with the base 4, and a force applying part connected with the unlocking body 3, where the force bearing part receives the external force from the pull ring 1, and the rotating part is rotated around by the rotating arm 20. During the rotating process, the unlocking body 3 is pushed to move in the direction close to the protrusion 40 through the force applying part.

The number of the rotating arm(s) 20 may be one or two, and when the number of the rotating arms 20 is two, the two rotating arms 20 are symmetrically arranged relative to the base 4. In a preferred embodiment, the number of the rotating arms 20 is two, and such structure bears more uniform force.

In an actual application scenario, the specific structures of the force bearing part and the rotating part on the rotating arm 20 have various alternative realization modes. Meanwhile, the structure of the base 4 connected with the rotating part and the structure of the pull ring 1 connected with the force bearing part can also be correspondingly designed.

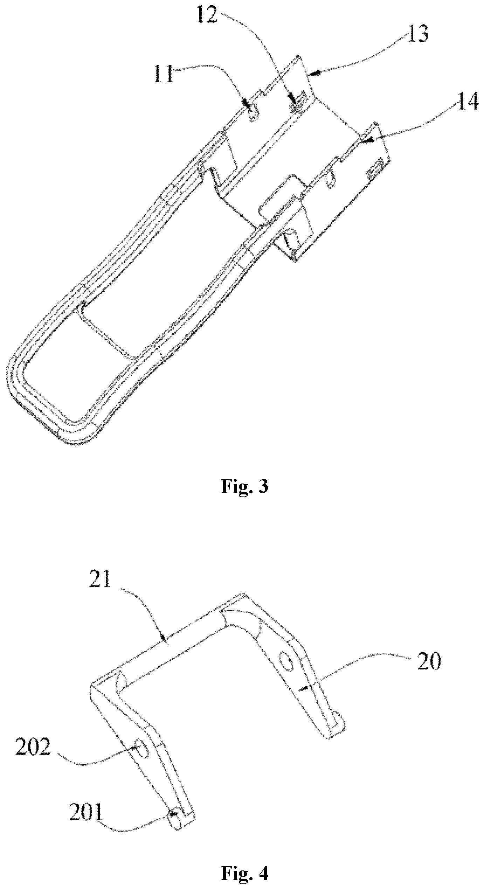

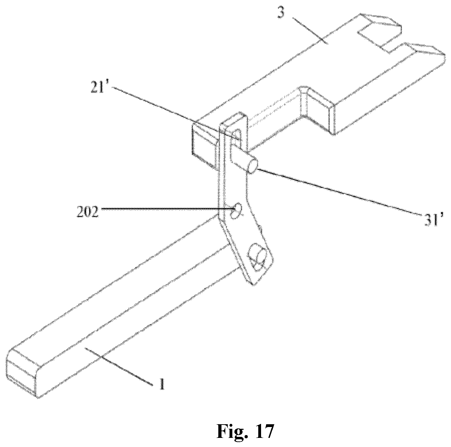

As shown in FIG. 3 to FIG. 5, in an optional embodiment, the force bearing part is specifically a fixing column 201, and a fixing hole 11 is provided in the pull ring 1; the fixing column 201 is coupled with the fixing hole 11, and the shaft column 41 is accommodated within a shaft hole 202, where the shaft column 41 and the shaft hole 202 may rotate relative to each other. In another optional embodiment, as shown in FIG. 17, the force bearing part is a fixing hole (not shown), and the pull ring 1 is provided with the fixing column in a matching way (not shown), where the fixing hole may be a long strip hole, a U-shaped hole or a U-shaped opening, and the fixing column is arranged in the fixing hole.

In an optional embodiment, the rotating part is a shaft hole, and a shaft column is provided on the base 4, where the shaft column and the shaft hole may rotate relative to each other. In another alternative embodiment, the rotating part is a shaft column, and a shaft hole is provided in the base 4, where the shaft column and the shaft hole may rotate relative to each other, so as to form a rotating connection through the shaft hole and the shaft column.

In an actual application scenario, the specific structures of the force applying part on the rotating arm 20 have various alternative implemention modes, and meanwhile, the structure of the base 4 connected with the force applying part and the structure of the unlocking body 3 connected with the force applying part can also be correspondingly designed.

In an optional embodiment, as shown in FIG. 3 to FIG. 4, the force applying part is specifically a rotating shaft 21 which is connected with the rotating arm 20, and a groove 31 is provided on the unlocking body 3, where the rotating shaft 21 is arranged in the groove 31. When the pull ring 1 receives an external force, the rotating arm 20 receives the external force and rotates around the shaft column 41, and during the rotating process, the rotating shaft 21 pushes the unlocking body 3 to move in the direction close to the protrusion 40 through the groove 31.

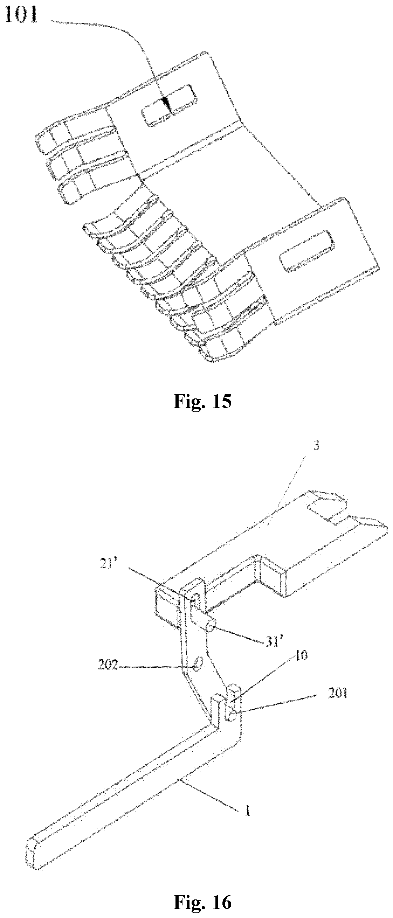

In other embodiments, as shown in FIG. 16 and FIG. 17, the force applying part is specifically a coupling hole 21', and a fixing shaft 3 1' is provided on the unlocking body 3; the fixing shaft 31' is arranged within the coupling hole 21'; the force bearing part of the rotating arm 20 receives the external force from the pull ring 1 and rotates around the shaft column 41, and during the rotating process, the coupling hole 21' drives the unlocking body 3 to move in the direction close to the protrusion 40. In other modification solutions, the force applying part is specifically a fixing shaft, and a coupling hole is provided in the unlocking body 3. It should be noted that the specific structures and connection modes of the force applying part and the unlocking body are not specifically defined, and the force applying part and the unlocking body can be adaptively designed in a matching way, as long as it is guaranteed that the unlocking fork 2 can drive the unlocking body 3 to move. As shown in FIG. 16 and FIG. 17, the modification modes of the pull ring, the unlocking fork and the unlocking body are mainly provides a design concept, and in actual product production, the structures of the pull ring, the unlocking fork and the unlocking body can be adaptively changed, so as to ensure that it can be adapted to other components of the optical module. In addition, the number of the unlocking forks may also be one or two, so as to ensure bearing the uniform force.

The structure of an optical module of an optional embodiment is described below in detail. With continued reference to FIG. 4, the rotating fork 2 comprises two rotating arms 20 arranged opposite to each other and a rotating shaft 21 connected with the rotating arms 20 which is provided with a fixing column 201 and a shaft hole 202; a shaft column 41 is provided on the base 4; a fixing hole 11 is provided in the pull ring 1; and a groove 31 is provided on the unlocking body 3. The fixing column 201 is coupled with the fixing hole 11, and the shaft column 41 forms a rotating connection with shaft hole 202. The rotating shaft 21 is arranged in the groove 31. When the pull ring 1 receives an external force, the rotating arm 20 receives the external force and rotates around the shaft column 41, and during the rotating process, the rotating shaft 21 pushes the unlocking body 3 to move in the direction close to the protrusion 40 through the groove 31. In an optional embodiment, the fixing column 201 is a circular column, and the fixing hole 11 is a waist round hole. As a result, such structure can not only fix the rotating fork 2 on the pull ring 1, but also facilitate disassembly and assembly.

In an actual application scenario, a guide groove 42 is provided on the base 4, a bending part 12 is provided on the pull ring 1, and the bending part 12 is arranged within the guide groove 42 and may move along the guide groove 42, thus ensuring that the pull ring 1 may move relative to the base 4.

In a preferred embodiment, the optical module further comprises an elastic member 5, which may be a spring, and a first accommodating space 43 is provided in the base 4; the elastic member 5 is accommodated within first accommodating space 43, and a blocking surface 33 is provided on the unlocking body 3; wherein the blocking surface 33 compresses the elastic member 5 when the unlocking body 3 moves in a direction close to the protrusion 40; and after the external force applied to the pull ring 1 are released, the elastic member 5 recovers, and the external force are applied to the blocking surface 33, so that the unlocking body 3 moves in a direction away from the protrusion 40. In the present embodiment, the pull ring 1 is loosened, the unlocking body 3 is pushed by means of the spring force and may complete automatic reset, whereby the unlocking structure of the optical module returns to the initial state, and the function of automatic reset is realized.

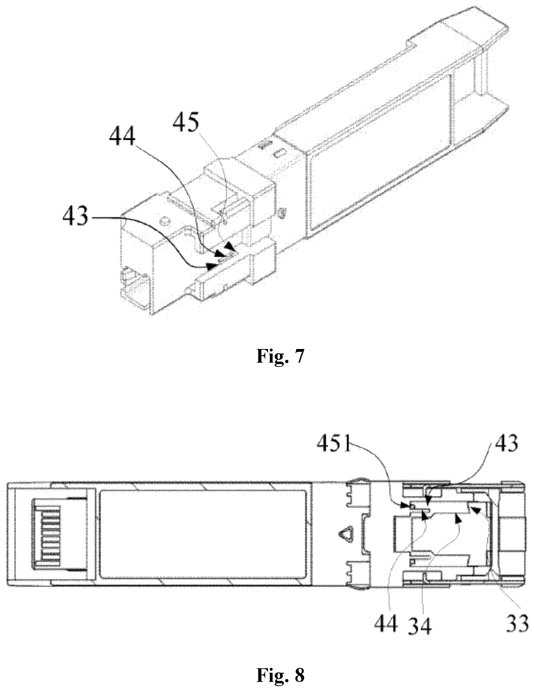

Further, in combination with FIGS. 7 and FIG. 8, a side plate 44 and a mounting surface are provided on the base 4; the side plate 44, the mounting surface and the side surface of the base 4 form the first accommodating space 43; a mounting column 451 is provided on the mounting surface; one end of the elastic member 5 is sleeved on the mounting column 451, and the other end of the elastic member 5 is provided adjacent to the blocking surface 33. The mounting column 451 may be a conical column.

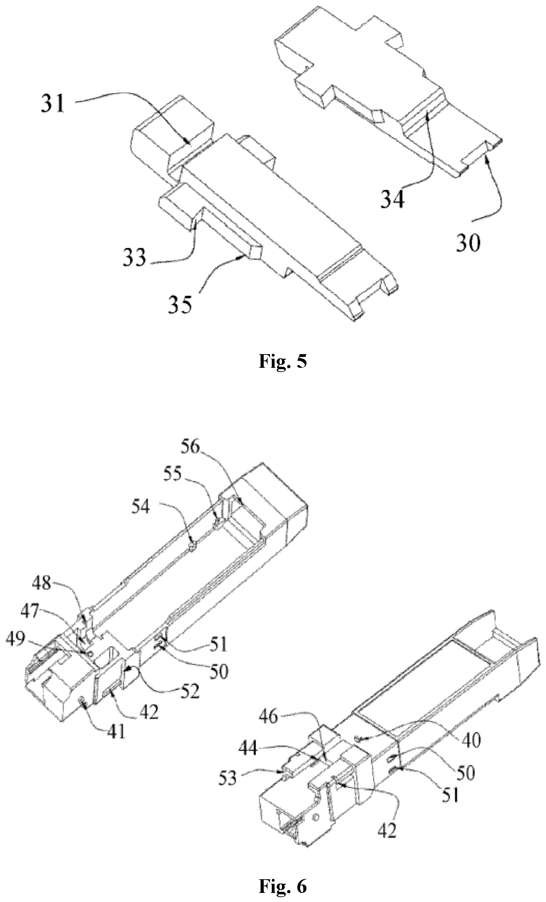

In combination with FIG. 5, a turning surface 34 and a limiting surface 35 are provided on the unlocking body 3, and the limiting surface 35 is connected with the blocking surface 33, wherein the blocking surface 33 compresses the elastic member 5 when the unlocking body 3 moves in a direction close to the protrusion 40, and the limiting surface 35 moves along the side plate 44 until the turning surface 34 abuts against the step surface 46.

In a preferred embodiment, the pull ring 1 further comprises a first side surface 13, and a first limiting surface 52 and a second limiting surface 53 are provided on the base 4, wherein when the optical module is in a locked state, the first side surface 13 of the pull ring 1 abuts against the first limiting surface 52, and thus limiting the pull ring 1 at a preset position, so as to ensure that the optical module is stably in a locked state. During the unlocking process, the rotating shaft 21 of the rotating fork 2 abuts against the second limiting surface 53, and thus limiting the moving distance of the fork opening 30, and avoiding the fork opening 30 from moving too far to the right and damaging the protrusion 40 and the interface device.

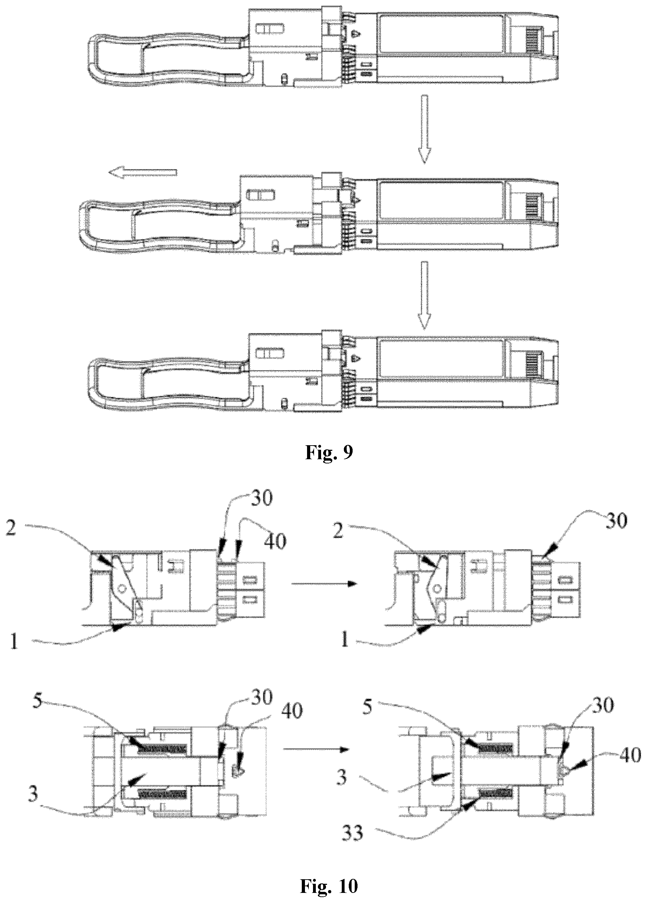

The locked state and unlocked state of the optical module are described below in combination with FIG. 9 to FIG. 11, wherein in FIG. 10, the diagram on the left shows that the optical module is in a locked state (corresponding to the topmost diagram and bottommost diagram of FIG. 9), and the diagram on the right side shows that the optical module is in an unlocked state (corresponding to the middle diagram of FIG. 9).

The locked state of the optial module: under the action of the elastic member 5, the unlocking body 3 stops at the limiting position on the left (as shown in the topmost diagram in FIG. 9), the rotating fork 2 and the pull ring 1 are stopped at the position shown in FIG. 10, and the protrusion 40 of the base 4 protrudes outside. When the optical module is inserted into an interface device (e.g. the interface device is a switch cage), the protrusion 40 of the base 4 is buckled into a lock hole 15 of the interface device (as shown in FIG. 11). In the locked state, the first side surface 13 of the pull ring 1 abuts against the first limiting surface 52 to limit the position.

The unlocked state of the optical module: the pull ring 1 is pulled to move leftwards (taking the perspective of FIG. 10 as an example); the fixing hole 11 of the pull ring 1 drives the fixing column 201 of the rotating fork 2, and thus applying a leftward horizontal force to the rotating fork 2, one end of the rotating arm 20 bears a force, which drives the rotating fork 2 to rotate around the rotating shaft 21 on the base 4, and the rotating shaft 21 of the rotating fork 2 pushes the groove 31 of the unlocking body 3 to move rightwards, thus pushing the unlocking body 3 to move rightwards. During the process that the unlocking body 3 moves rightwards, the elastic member 5 is in an extruded state, the fork opening 30 of the unlocking body 3 extends out to push the lock hole 15 of the interface device open, and the protrusion 40 of the base 4 is released from the lock hole 15 of the interface device (as shown in the diagrams). At this moment, the pull ring 1 is continuously pulled, which may pull the optical module out of the interface device. In the unlocked state, the rotating shaft 21 of the rotating fork 2 abuts against the second limiting surface 53 to limit the position, thus limiting the moving distance of the fork opening 30, and avoiding the fork opening 30 from moving too far to the right and damaging the protrusion 40 and the interface device.

After the pull ring 1 is released, the elastic member 5 recovers and pushs the blocking surface 33 of the unlocking body 3 to move leftwards, and the unlocking body 3 returns to the limiting position on the left, i.e. the initial locked state, to reset.

In the present embodiment, the unlocking structure uses a principle of flat pull and flat push of the top lever, pulling the pull ring 1 to drive the lower end of the rotating fork 2 to move leftwards and the upper end of the rotating fork 2 to move rightwards, and pusing the unlocking body 3 to move rightwards, and to enable the fork opening 30 at the front end of the unlocking body 3 to pry a shrapnel of the interface device, so as to make the protrusion 40 on the base 4 of the optical module be released from the lock hole 15 of the interface device, thus completing the unlocking action is completed, and the optical module can be unplugged from the interface device. The pull ring 1 is loosened, and by means of the spring force pushing the unlocking body 3, the unlocking body 3 may be automatically reset and the unlocking structure of the optical module returns to the initial state.

### Embodiment 2:

The foregoing embodiment emphatically describes the unlocking structure of the optical module, and the following will specifically describe other structures of the optical module in combination with the Embodiment 1, so as to enable the optical module to be compact in structure and small in size, meeting the increasingly miniaturized requirements.

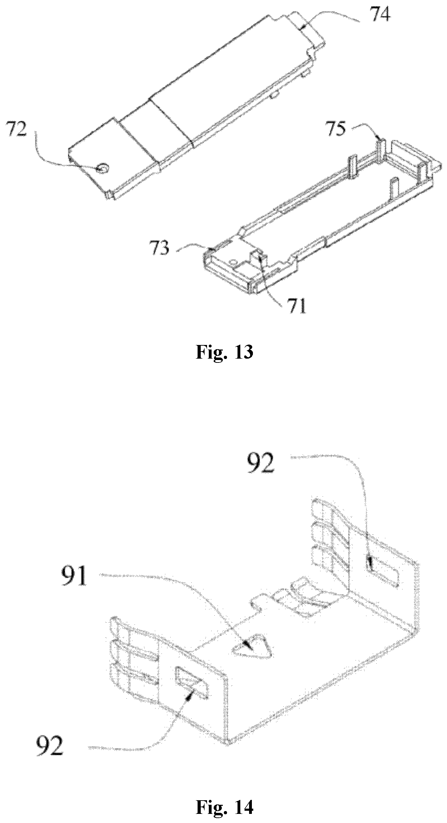

In combination with FIG. 12 and FIG. 13, the optical module further comprises a circuit board 6 and an upper cover 7; an optical fiber device 60 is provided on the circuit board 6, and a cylindrical portion 601 and a disc portion 602 are provided on the optical fiber device 60; the base 4 is provided with a first cylindrical surface 47 and a semicircular groove 48; a second cylindrical surface 71 is provided on the upper cover 7; the disc portion 602 is arranged in the semicircular groove 48, and the cylindrical portion 601 is limited in a space formed by the first cylindrical surface 47 and the second cylindrical surface 71.

The optical module further comprises a screw 8. A first through hole 72 is provided in the upper cover 7, and a threaded hole 49 is provided in the base 4. The screw 8 penetrates the first through hole 72 and forms a threaded connection with the threaded hole 49, so as to fix the upper cover 7 and the base 4 relative to each other.

Further, the upper cover 7 further comprises a sliding groove 73, and the pull ring 1 is provided with a second side surface 14 which is arranged and is slidable in the sliding groove 73.

In the present embodiment, the base 4 further comprises a supporting table 54 and a positioning column 55, and the circuit board 6 is provided with a positioning groove 61, wherein the supporting table 54 is used for supporting the circuit board 6, and the positioning groove 61 is coupled with the positioning column 55, thereby stably placing the circuit board 6 on the base 4.

In the present embodiment, the base 4 further comprises a first coupling surface 56, and the upper cover 7 comprises a second coupling surface 74, where the first coupling surface 56 and the second coupling surface 74 are in contact with each other, so as to flatly place the upper cover 7 on the base 4.

In the present embodiment, the optical module further comprises a first housing 9; a top surface of the first housing 9 is provided with a second through hole 91; a side surface of the first housing 9 is provided with a third through hole 92; a first wedge table 50 is provided on the base 4; the protrusion 40 passes through the second through hole 91, and the third through hole 92 is engaged with the first wedge table 50, so as to fix the first housing 9 on the base 4.

In the present embodiment, the optical module further comprises a second housing 10; a side surface of the second housing 10 is provided with a fourth through hole 101; a second wedge table 51 is provided on the base 4, and the fourth through hole 101 is engaged with the second wedge table 51, so as to fix the second housing 10 on the base 4.

In the present embodiment, the pull ring 1 drives the rotating fork 2 to rotate along the base 4, and during the rotating process, the rotating fork 2 pushes the unlocking body 3 to move in the direction close to the protrusion 40, until the fork opening 30 abuts and opens the lock hole 15 of the interface device, and then the protrusion 40 is decoupled from the lock hole 15 of the interface device, thereby realizing an unlocking function. Through a long pull ring structure, the problem that it is difficult for the optical module to be plugged and unplugged on intensive cabinets is solved; the push-type unlocking structure ensures the space inside the optical module to the maximum extent, and during the unlocking process, the structure of the optical module per se will not be damaged, thereby improving the reliability of the optical module, and prolonging the service life of the optical module. The following problem is solved that it is difficult for the optical module to be plugged and unplugged on intensive cabinets, and during the unlocking process, it is prone to causing destruction for the optical module, and then the unlocking structure occupies a large space.

In the present embodiment, the unlocking operation is convenient and fast, the horizontal-pushing-type unlocking may avoid damages to the optical module, and the optical module has high reliability and a stable structure, and easy to assemble and disassemble. In addition, the self-resetting unlocking design can be applied to the pakcaging of various OSA devices and COB devices, which can meet more application scenarios.

In the present embodiment, the optical module has the following features: using a fixed-point design for the protrusion used for locking, which has high dimensional accuracy and reliable locking; a horizontal-pushing-type unlocking, enabling the unlocking structure to occupy a small space and have a larger inner cavity space under a limited volume, which can be adapted to various high-speed optical devices with large volume, and which adapts to the development trend of small packaging and large rate of future optical modules; a pull ring capable of being automatically reset, which is convenient for re-locking; a flat-pulling-type unlocking, which is convenient for the modules to be plugged and unplugged on dense cabinets; using a sheet metal flattening design, enabling the structure to be compact, supporting SFP+ under LC optical port to be unlocked smoothly without pulling tail fibers, which brings great convenience to operators; and the unlocking part uses a Screw-free design, which is easy for assembly producing and has high reliability.

Moreover, the unlocking structure of the present embodiment is suitable for coaxial device packaging of the optical module, such as PCBA of BOSA.

Those skilled in the art can easily understand that the above described embodiments are merely preferred embodiments of the present disclosure, but are not intended to limit the present disclosure, and modification, equivalent replacement, and improvement made without departing from the spirit and principle of the present disclosure shall fall within the protection scope of the present disclosure.

## Claims

1. An optical module, wherein the optical module comprises
a pull ring (1),
a rotating fork (2),
an unlocking body (3) provided with a fork opening (30), and
a base (4) provided with a protrusion (40),
wherein the unlocking body (3) is provided on the base (4) and is connected with the rotating fork (2), and the rotating fork (2) is movably connected with the base (4) and is connected with the pull ring (1);
wherein the protrusion (40) is used for coupling with a lock hole (15) of an interface device, so as to lock the optical module on the interface device;
wherein the pull ring (1) is used for receiving an external force, so as to drive the rotating fork (2) to rotate along the base (4), and during the rotating process, the rotating fork (2) pushes the unlocking body (3) to move in a direction close to the protrusion (40), until the fork opening (30) abuts and opens the lock hole (15) of the interface device, and then the protrusion (40) is decoupled from the lock hole (15) of the interface device.

2. The optical module of claim 1, wherein the rotating fork (2) comprises a rotating arm (20) which is provided with a force bearing part, a rotating part and a force applying part, wherein the force bearing part is connected with the push ring (1), the rotating part is rotatably connected with the base (4), and the force applying part is connected with the unlocking body (3); and
wherein the force bearing part receives an external force from the pull ring (1) and drives the rotating arm (20) to rotate around the rotating part, and during the rotating process, the force applying part pushes the unlocking body (3) to move in the direction close to the protrusion (40).

3. The optical module of claim 2, wherein the force applying part is specifically a rotating shaft (21), and a groove (31) is provided on the unlocking body (3), wherein the rotating shaft (21) is arranged in the groove (31);
when the pull ring (1) receives the external force, the rotating arm (20) receives the external force and rotates around the rotating part, and during the rotating process, the rotating shaft (21) pushes the unlocking body (3) to move in the direction close to the protrusion (40) through the groove (31).

4. The optical module of claim 2, wherein the force applying part is specifically a coupling hole, and the unlocking body (3) is provided with a fixing shaft which is arranged within the coupling hole; and
the force bearing part receives the external force from the pull ring (1), and the rotating arm (20) rotates around the rotating part, the coupling hole driving the unlocking body (3) to move in the direction close to the protrusion (40) during the rotating process.

5. The optical module of claim 2, wherein the force applying part is specifically a fixing shaft, and a coupling hole is provided on the unlocking body (3), wherein the fixing shaft is provided within the coupling hole.

6. The optical module of claim 2, wherein the force bearing part is specifically a fixing column (201), the rotating part being specifically a shaft hole (202), a shaft column (41) being provided on the base (4), and a fixing hole (11) being provided in the pull ring (1); and
wherein the fixing column (201) is coupled with the fixing hole (11), and the shaft column (41) is accommodated within the shaft hole (202), the shaft column (41) and the shaft hole (202) being rotatable relative to each other.

7. The optical module of claim 2, wherein the force bearing part is specifically a fixing hole, the rotating part being specifically a shaft hole (202), a shaft column (41) being provided on the base (4), and a fixing column being provided on the pull ring (1); and
wherein the fixing column is coupled with the fixing hole, and the shaft column (41) is accommodated within the shaft hole (202), the shaft column (41) and the shaft hole (202) being rotatable relative to each other.

8. The optical module of claim 2, wherein the force bearing part is specifically a fixing column (201), the rotating part being specifically a shaft column, the base (4) being provided with a shaft hole, and the pull ring (1) being provided with a fixing hole (11); and
wherein the fixing column (201) is coupled with the fixing hole (11), and the shaft column is accommodated within the shaft hole, the shaft column and the shaft hole being rotatable relative to each other.

9. The optical module of claim 2, wherein the force bearing part is specifically a fixing hole, the rotating part being specifically a shaft column, the base (4) being provided with a shaft hole, and the pull ring (1) being provided with a fixing column; and
wherein the fixing column is coupled with the fixing hole, and the shaft column is accommodated within the shaft hole, the shaft column and the shaft hole being rotatable relative to each other.

10. The optical module of claim 1, wherein the base (4) is provided with a guide groove (42), and the pull ring (1) is provided with a bending part (12), wherein the bending part (12) is arranged in the guide groove (42) and is movable along the guide groove (42).

11. The optical module of claim 1, wherein the optical module further comprises an elastic member (5), the base (4) being provided with a first accommodating space (43), the elastic member (5) being accommodated within the first accommodating space (43), and a blocking surface (33) being provided on the unlocking body (3); and
wherein the blocking surface (33) compresses the elastic member (5) when the unlocking body (3) moves in the direction close to the protrusion (40); and after an external force applied to the pull ring (1) is released, the elastic member (5) recovers, and an external force is applied to the blocking surface (33), so that the unlocking body (3) moves in a direction away from the protrusion (40).

12. The optical module of claim 11, wherein a side plate (44) and a fixing surface 45 are provided on the base (4), the side plate (44), the fixing surface (45) and a side surface of the base (4) forming the first accommodating space (43), and a mounting column (451) is provided on the fixing surface (45), wherein one end of the elastic member (5) is sleeved on the mounting column (451), and the other end of the elastic member (5) is provided adjacent to the blocking surface (33).

13. The optical module of claim 12, wherein a step surface (46) is provided on the base (4), and a turning surface (34) and a limiting surface (35) are provided on the unlocking body (3), the limiting surface (35) being connected with the blocking surface (33);
wherein the blocking surface (33) compresses the elastic member (5) when the unlocking body (3) moves in the direction close to the protrusion (40); and the limiting surface (35) moves along the side plate (44) until the turning surface (34) abuts against the step surface (46).

14. The optical module of claim 1, wherein the optical module further comprises a circuit board (6) and an upper cover (7), an optical fiber device (60) being provided on the circuit board (6), a cylindrical portion (601) and a disc portion (602) being provided on the optical fiber device (60), and a first cylindrical surface (47) and a semicircular groove (48) are provided on the base (4), a second cylindrical surface (71) being provided on the upper cover (7), wherein the disc portion (602) is arranged in the semicircular groove (48), and the cylindrical portion (601) is limited in a space formed by the first cylindrical surface (47) and the second cylindrical surface (71).

15. The optical module of claim 14, wherein the optical module further comprises a screw (8), a first through hole (72) being provided in the upper cover (7), a threaded hole 49 being provided in the base (4), wherein the screw (8) penetrates the first through hole (72) and forms a threaded connection with the threaded hole (49), so as to fix the upper cover (7) and the base (4) relative to each other.

16. The optical module of claim 14, wherein the optical module further comprises a first housing (9), a top surface of the first housing (9) being provided with a second through hole (91), a side surface of the first housing (9) being provided with a third through hole (92), a first wedge table (50) being provided on the base (4), wherein the protrusion (40) passes through the second through hole (91), and the third through hole (92) is engaged with the first wedge table (50), so as to fix the first housing (9) on the base (4).

17. The optical module of claim 14, wherein the optical module further comprises a second housing (10), a side surface of the second housing (10) being provided with a fourth through hole (101), a second wedge table (51) being provided on the base (4), wherein the fourth through hole (101) is engaged with the second wedge table (51), so as to fix the second housing (10) on the base (4).
